# EUROPEAN PATENT SPECIFICATION

(11) **EP 3 273 363 B1**
(45) Date of publication and mention of the grant of the patent: **01.05.2019**
(21) Application number: 17001187.8
(22) Date of filing: 12.07.2017
(51) Int. Cl.: G06F 17/30, G06F 12/0866, G06F 9/445

(54) **ZERO DOWNTIME DATABASE UPDATES WITH DATABASE CONFIGURATION CHANGES**
AKTUALISIERUNGEN EINER DATENBANK OHNE AUSFALLZEIT MIT DATENBANKKONFIGURATIONSÄNDERUNGEN
MISES À JOUR DE BASE DE DONNÉES SANS TEMPS D'ARRÊT COMPORTANT DES CHANGEMENTS DE CONFIGURATION DE LA BASE DE DONNÉES

(30) Priority: 19.07.2016 US 201615214144
(43) Date of publication of application: 24.01.2018
(73) Proprietor: SAP SE, 69190 Walldorf (DE)
(72) Inventor: LUI, Francis, 69190 Walldorf (DE); YU, Leo Chi-Lok, 69190 Walldorf (DE); CHAN, Ho Kei David, 69190 Walldorf (DE); CHIU, Changching, 69190 Walldorf (DE); TAYARANI NAJARAN, Mahdi, 69190 Walldorf (DE)
(74) Representative: Müller-Boré & Partner Patentanwälte PartG mbB

(56) References cited:
- US-A1- 2014 173 566
- US-A1- 2016 063 048
- Martin Fowler: "BlueGreenDeployment", MartinFowler.com, 5 June 2015 (2015-06-05), pages 1-3, XP055410736, Retrieved from the Internet: URL:https://martinfowler.com/bliki/BlueGre enDeployment.html [retrieved on 2017-09-27]
- WANG F ET AL: "SITAR: A Scalable Intrusion-Tolerant Architecture for Distributed Services", PROCEEDINGS OF THE IEEE WORKSHOP ON INFORMATION ASSURANCE AND SECURITY, 5 June 2001 (2001-06-05), - 6 June 2001 (2001-06-06), pages 38-45, XP002218596,

## Description

### BACKGROUND

It is important for database systems that service client requests to be highly available and responsive to such requests. For example, database clients in a high-availability database environment (e.g., a web-based or cloud database environment supporting many clients) may expect that the database system be continuously available with little, if any, downtime. Furthermore, database clients may expect that response times for database requests be very short, such as less than a second or a small number of seconds.

In such high-availability database environments, any downtime or interruption in service can be a problem. For example, in some database systems, the database is taken offline when changes to the database need to be made. Taking a database offline can result in dropped or failed connections, timeouts, delays, or other problems connecting to the database. In some database systems, database requests are queued while changes to the database need to be made. Queueing database requests can result in delayed responses, failed connections, timeouts, or other degradations in service.

Therefore, there exists ample opportunity for improvement in technologies related to performing updates to database systems.

US 2014/173566 A1 discloses that websites, including supporting databases, are updated with little or no downtime. A database may be replicated prior to updating, so that updates can be performed on one copy while the other remains operational. The data may remain in one location while an application programming interface for interacting with the data using new software code is introduced. Another application programming interface remains operational while the update is taking place. Public and private synonyms are used to direct web traffic to the appropriate application programming interface during the update process.

Martin Fowler: "BlueGreenDeployment", MartinFowler.com, 5 June 2015, pages 1 to 3, [retrieved on 2017-09-27] discloses a complete automation of deployment processes. US 2016/063048 A1 discloses examples which enable reduction of database downtime in a live production environment of an on-demand database service during repair and/or maintenance tasks. A source database and a target database are provided. Data is copied from the source database to the target database to create a mirrored set of data. Access is limited to one or more designated tables in the target database. General traffic is redirected from the source database to the target database, wherein the redirection occurs for a duration of a maintenance period. Data modifications that occur in the target database during the maintenance period are captured and then replicated into the source database. Finally, general traffic is redirected from the target database to the source database.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

Various technologies are described herein for performing database updates in a database environment where the database remains accessible during the updates. For example, a number of database clients (e.g., computer servers, client devices, etc.) may utilize a database environment for running queries or performing transactions. When an update to the database environment needs to be performed (e.g., a change to the database schema), instead of taking the database offline, the database can remain accessible to the database clients throughout the update process. The update process can include switching database connections between a first copy of the database and a second copy of the database that are being replicated. Technologies are also described for performing updates to application code used to interact with the database environment (e.g., alone or in combination with database system updates), while the database environment and memory cache remain accessible with zero-downtime.

### BRIEF DESCRIPTION OF THE DRAWINGS

Figures 1A and 1B are diagrams depicting an example database environment for performing zero downtime database updates using a first and second copy of a database.
Figures 2A and 2B are diagrams depicting an example database environment for performing zero downtime database updates using a master and slave copy of a database.
Figure 3 is a flowchart of an example method for performing zero downtime database updates in a database environment using a first and second copy of a database.
Figure 4 is a flowchart of an example method for performing zero downtime database updates in a database environment using a master and slave copy of a database.
Figure 5 is a diagram of an example computing system in which some described embodiments can be implemented.
Figure 6 is an example cloud computing environment that can be used in conjunction with the technologies described herein.

### DETAILED DESCRIPTION

### Example 1 - Overview

The following description is directed to technologies for performing database updates (database system changes) in a database environment where the database remains accessible during the updates, which is also called zero downtime database updates. For example, a number of database clients (e.g., computer servers, client devices, etc.) may utilize a database environment for running queries or performing transactions. When an update to the database environment needs to be performed (e.g., a change to the database schema), instead of taking the database offline, the database can remain accessible to the database clients throughout the update process. Furthermore, the database environment can remain accessible without queueing the database requests (e.g., queries or transactions) or otherwise interrupting the database requests during the update process. Technologies are also described for performing updates to application code used to interact with the database environment (e.g., alone or in combination with database system updates).

For example, database updates can be performed in a database environment where a database is being replicated from a first copy of the database (e.g., a current master database) to at least one second copy of the database (e.g., a current slave database). Database connections from database clients can be directed to the first copy of the database. The database system changes can be performed on the at least one second copy of the database. Once the database system changes have been performed, the database connections can be switched from the first copy of the database to the second copy of the database and replication can be started from the second copy to the first copy (e.g., the replication can be reversed).

Database system changes refer to changes to the database itself (e.g., database schema changes), changes to the configuration of the database, or hardware or software changes. For example, database schema changes include adding columns to a table. Database configuration changes include changes to parameters of the database (e.g., buffer settings, log file settings, etc.) or other changes such as rebooting the database. Hardware changes include changes to computing device hardware on which the database is running (e.g., adding ram or storage, replacing a hardware component, replacing a failed hard drive, etc.). Software changes include changes to software running on the computing device (e.g., changes to the operating system or virtual machine) other that the database software.

Application code used to interact with the database environment can also be updated, separately or in combination with updates to the database environment. For example, a current code version can be currently deployed on server and client devices. A new code version can then be deployed and activated once the updates to the database environment are complete.

In implementations, returned database data (e.g., rows of data returned by queries) is stored in a memory cache (also called an in-memory cache process). For example, the memory cache can be implemented using the Memcached system (a memory cache system described at https://memcached.org/) or by other technology that caches database results in memory (e.g., using a distributed system that stores the data in memory of multiple devices). The returned database data can be serialized into a key-value pair and stored in the memory cache. In some implementations, the keys are modified to include an indication of the code version used to create the data associated with the keys. For example, database data that is retrieved using server applications running a current code version can store key-value data in the memory cache where the keys have an indication of the current code version stored in the key (e.g., a build number, commit identifier, or other indication can be added to the beginning or end of the key). When the server applications are updated to a new code version, new keys can include an indication of the new code version. For example, database data that is retrieved using server applications running the new code version can store key-value data in the memory cache where the keys have an indication of the new code version stored in the key. In this way, the key-value data stored in the memory cache by the current code version can be distinguished from the key-value data stored in the memory cache by the new code version.

Being able to distinguish the data in the memory cache between the code versions can be important when the code version of the server applications is being updated. For example, a new code version of the server applications may not operate correctly with data that was stored in the memory cache by an older code version. Therefore, server applications running a given code version can be configured to operate only with keys associated with the given code version in the memory cache.

In a high-availability database environment (e.g., a web-based or cloud database environment supporting may clients), taking the database offline for configuration changes can be problematic. In some solutions, configuration changes are handled by queueing database operations (e.g., write operations) during the changes. While queueing database operations can maintain availability of the database, there are a number of problems. For example, queueing database operations may only allow the database to be taken offline for a short time period (e.g., a number of seconds), which may not be sufficient time to make significant changes to the database system. In addition, database software and/or application software may need to be re-written in order to support queueing of database operations (e.g., to queue operations in a memory queue until the database becomes available). Finally, queueing database operations may result in a delayed response to database clients and/or database errors.

In the technologies described herein, updates to database environments and/or updates to application code used to interact with the database environments can be performed while the database remains accessible and without queueing database operations during the update procedure. For example, database operations can continue, including write operations that add, update, and/or delete database data, while the updates are performed. By maintaining access to the database during the update procedure, computing resources can be saved (e.g., memory or storage that would otherwise be used by queueing database operations). In addition, savings in terms of responsiveness can also be realized (e.g., operations do not have to be delayed in the queue and can instead be completed more quickly). Finally, various combinations of operations used to perform the update procedure can minimize the chance of a problem occurring within the database environment during the update procedure (e.g., minimize the chance of any database writes being lost or database connections failing).

The technologies described herein can be applied to perform zero downtime database updates in a database environment such as a MySQL® database (MySQL is a database system provided by Oracle® Corporation), an SAP HANA® database (SAP HANA is a database platform provided by SAP®), or another type of database.

### Example 2 - Database Environments Supporting Zero Downtime Updates

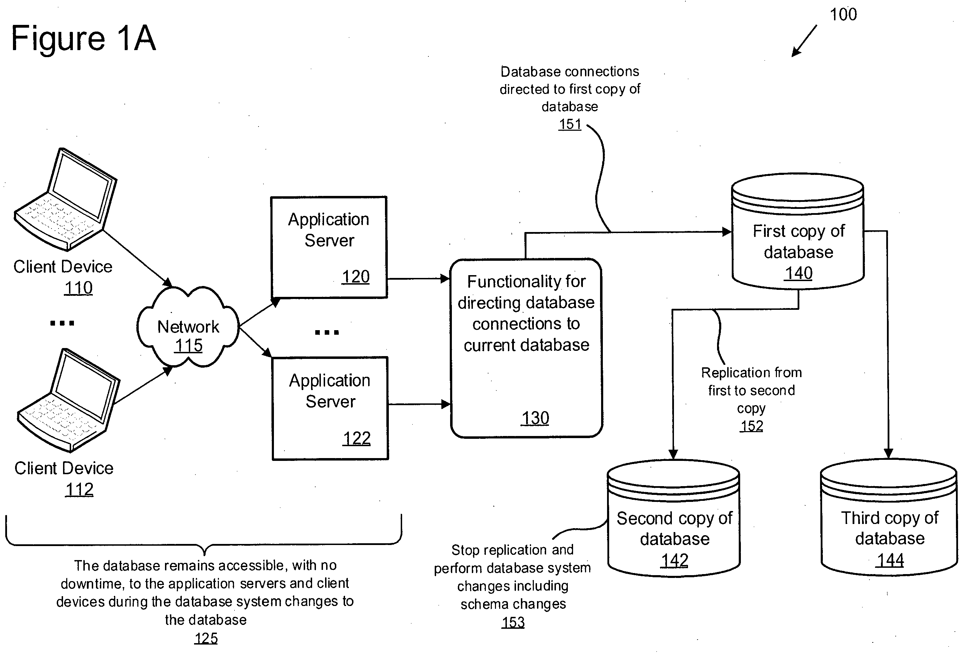

Figure 1A is a diagram 100 depicting an example database environment for performing zero downtime database updates using at least a first and second copy of a database. The database environment includes a first copy of a database 140 and a second copy of the database 142. One or more additional copies of the database may also be present, such as the third copy of the database 144. In some implementations, the first copy of the database 140 is a master copy of the database, the second copy of the database 142 is a slave copy of the database, and the third copy of the database 144 is a second slave copy of the database.

In the example database environment, the first copy of the database 140 is being replicated to the second copy of the database 142, as indicated at 152. The first copy of the database 140 may also be replicated to the third copy of the database 144. In some implementations, the first copy of the database 140 is in a read-write mode while the second copy of the database 142 and the third copy of the database 144 are in a read-only mode.

The database environment services database requests from client devices (e.g., client devices 110 and 112) which are connected via a network 115 (e.g., comprising the Internet) and routed through application servers (e.g., application servers 120 and 122). In some implementations, the client devices are running web browser database applications that connected to web server applications running on the application servers. In some implementations, the client devices can connect directly to the database environment.

In the database environment, database connections from the application servers and/or client devices are controlled by functionality, depicted at 130, for directing database connections to a current database. For example, the functionality 130 can be a load balancer, router, networking device, Internet protocol (IP) address service, a virtual component, or another type of computing device or service configured to direct network connections to particular copies of the database. The functionality 130 supports switching between copies of the database when needed.

In some implementations, the functionality 130 controls a virtual IP address to which the application servers and/or client devices connect. The functionality 130 then directs the database connections to one of the database copies. As depicted in Figure 1A, the functionality 130 is currently directing database connections to the first copy of the database 140 (e.g., acting as a current master copy of the database), as depicted at 151 (e.g., the virtual IP address currently points to the first copy). In some implementations, the functionality 130 controls a floating IP address to which the servers and/or client devices connect. The floating IP address can then be reassigned to direct database connections to a different copy of the database. For example, the floating IP address can be assigned to the first copy of the database 140. When the database connections need to be switched, the floating IP address can be reassigned to the second copy of the database 142 (e.g., removed from a network interface associated with the first copy of the database 140 and assigned to a network interface associated with the second copy of the database 142). In some implementations, controlling the floating IP address is performed using address resolution protocol (ARP) and/or reverse address resolution protocol (RARP) techniques. In some implementations, the functionality 130 directs database connections comprising write operations (e.g., operations that add, update, or delete database data) to the first copy of the database 140, while other database connections that do not comprise write operations (e.g., database operations that only read data) may be directed to other copies of the database as well (e.g., to the second copy of the database 142 and/or the third copy of the database 144), such as for load balancing purposes.

The environment supports updating of the database environment, including database system changes, while the database remains accessible, as depicted at 125. In order to perform the update process, a number of operations are performed. The operations are typically performed in a specific order, but the order of some of the operations can vary while still achieving the result of a zero downtime database update. At the beginning of the update process, database connections are directed to the first copy of the database 140, as depicted at 151, and the first copy of the database 140 is being replicated to the second copy of the database 142 (and in some implementations to the third copy of the database 144 as well), as depicted at 152. Next, the replication from the first copy of the database 140 to the second copy of the database 142 is stopped (and in some implementations to the third copy of the database 144 as well), as depicted at 153. After the replication stops, database system changes are performed to the second copy of the database 142, as depicted at 153. The database system changes can comprise changes to the database schema, changes to the database configuration, hardware and/or software changes to the computing device on which the database is running, and/or other changes related to the second copy of the database 142. After the database system changes are complete, replication from the first copy of the database 140 to the second copy of the database 142 is resumed. For example, during the time period in which the database system changes are performed (e.g., a number of seconds, minutes, or hours) database writes are still being directed to the first copy of the database 140. In order to prepare for switching the database connections and the replication, the updated database data needs to be replicated so that the first and second copies are again in sync.

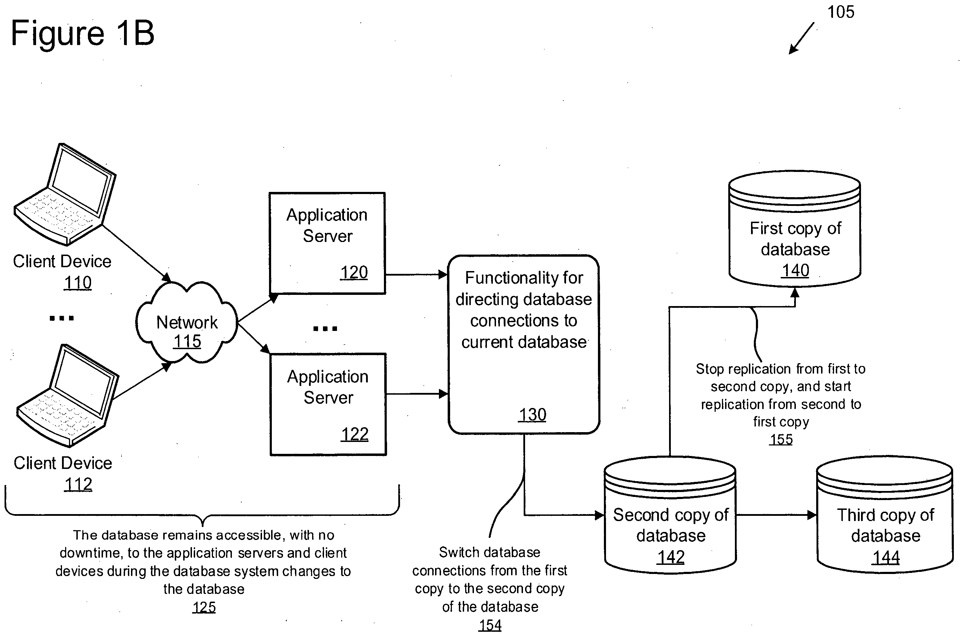

The update process continues in Figure 1B, which is an example environment 105 depicting the database environment of Figure 1A. The update process continues with switching of the database connections, by the functionality 130, so that database connections are directed to the second copy of the database 142 instead of the first copy of the database 140, as depicted at 154. In some implementations, the second copy of the database 142 is set to a read-write mode before the database connections are switched. In some implementations the switching is only for database connections comprising write operations. Switching of the database connections can be initiated upon the first copy of the database 140 and the second copy of the database 142 coming into sync after resuming replication. After the database connections are switched to the second copy of the database 142, replication from the first copy of the database 140 to the second copy of the database 142 is stopped, and replication from the second copy of the database 142 to the first copy of the database 140 is started, as depicted at 155 (e.g., the second copy of the database 142 can be called the new master and the first copy of the database 140 can be called the new slave). In some implementations, replication is also started from the second copy of the database 142 to the third copy of the database 144.

As depicted at 125, the entire updated process can be performed while the database remains accessible to the application servers and client devices. For example, the application servers and client devices can continue to perform database operations, via database connections managed by the functionality 130, including operations that read and/or write database data.

The environment also supports updating of code versions of software run on the application servers (e.g., application servers 120 and 122) and/or client devices (e.g., client devices 110 and 112), collectively called server applications. For example, the application servers and/or client devices can be running a first code version during the update process. The first code version (also called a current code version) is configured to operate with the database before the database configuration changes have been applied as well as after the database configuration changes have been applied. For example, the first code version can operate with the database even after database schema changes have been made (e.g., rows inserted using the first code version can use default field values for any new columns added in the schema change). As part of the update process a second code version (also called a new code version) can be introduced. In some implementations, the new code version is deployed (but remains inactive) to the application servers and/or client devices at or near the beginning of the update process (e.g., before the replication between the first copy of the database 140 and the second copy of the database 142 is stopped). However, the new code version can be deployed at other times as well. The new code version can be activated once the database connections are directed to the second copy of the database 142. In some implementations, the new code version is activated once the operations depicted at 155 are complete.

For example, the new code version can be deployed in combination with the database system changes in order to take advantage of database schema changes or other changes to the database system. For example, the new code version can utilize new database columns added by a schema change or remove support for database columns that have been deleted. The new code version can also be deployed independent of any changes to the database system.

Updating the code version involves making changes to memory cache keys. For example, a memory cache system can be implemented on one or more of the application servers (e.g., a distributed memory cache system running on application servers 120 and 122). Database data that is retrieved from the database by server applications running a first code version can be stored in the memory cache using keys that include an indication of the first code version. When the server applications are updated to a second code version, database data that is retrieved from the database by server applications running the second code version can be stored in the memory cache using keys that include an indication of the second code version. Therefore, the database data stored in the memory cache can be separated based on the code version. In addition, the code version update can be performed while the database environment and memory cache remain accessible (e.g., the memory cache does not have to be restarted or cleared in order to update the code version).

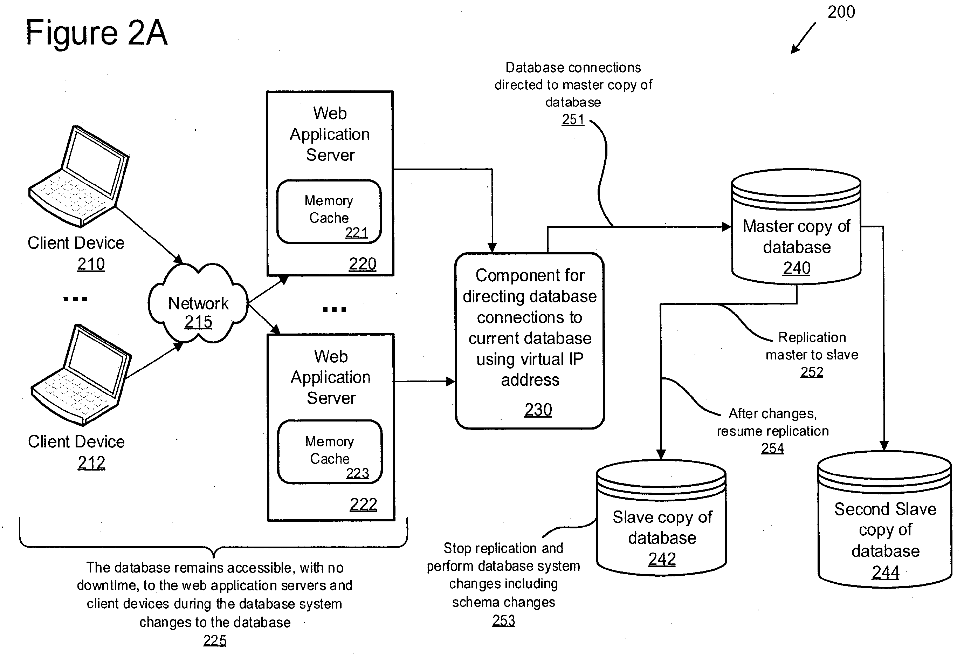

Figure 2A is a diagram 200 depicting an example database environment for performing zero downtime database updates using a master copy of a database and at least one slave copy of the database. The database environment includes the master copy of the database 240 and the slave copy of the database 242. One or more additional slave copies of the database may also be present, such as the second slave copy of the database 244.

In the example database environment, the master copy of the database 240 is being replicated to the slave copy of the database 242, as indicated at 252. The master copy of the database 240 may also be replicated to a second slave copy of the database 244. In some implementations, the master copy of the database 240 is in a read-write mode while the slave copies, 242 and 244, are in a read-only mode.

The database environment services database requests from client devices (e.g., client devices 210 and 212) which are connected via a network 215 (e.g., comprising the Internet) and routed through web application servers (e.g., web application servers 220 and 222). The client devices access the web application servers via web browsers running on the client devices. In some implementations, the client devices can connect to the database environment using software other than web browsers (e.g., via client database applications).

In the database environment, database connections from the web application servers connect to a virtual IP address. The virtual IP address is then directed, by a component 230, to one of the copies of the database. For example, the component 230 can be a load balancer, router, networking device, virtual component, or another type of computing device or service configured to direct network connections to particular copies of the database. The component 230 supports switching between copies of the database when needed. As depicted in Figure 2A, the component 230 is currently directing database connections to the master copy of the database 240, as depicted at 251. In some implementations, the component 230 directs database connections comprising write operations (e.g., operations that add, update, or delete database data) to the master copy of the database 240, while other database connections that do not comprise write operations (e.g., database operations that only read data) may be directed to other copies of the database as well, such as for load balancing purposes. In some implementations, a floating IP address is used instead of a virtual IP address.

The environment supports updating of the database environment, including database system changes, while the database remains accessible, as depicted at 225. In order to perform the update process, a number of operations are performed. The operations are typically performed in a specific order, but the order of some of the operations can vary while still achieving the result of a zero downtime database update. At the beginning of the update process, database connections are directed to the master copy of the database 240, as depicted at 251, and the master copy of the database 240 is being replicated to the slave copy of the database 242 (and in some implementations to the second slave copy of the database 244 as well), as depicted at 252. Next, a new code version of the server applications is deployed. The new code version remains inactive. For example, the new code version can be deployed to the web application servers and retrieved by the client devices when needed (e.g., when the client devices first need to run the new code version).

Next, the replication from the master copy of the database 240 to the slave copy of the database 242 is stopped (and in some implementations to the second slave copy of the database 244 as well), as depicted at 253. After the replication stops, database system changes are performed to the slave copy of the database 242, as depicted at 253. The database system changes can comprise changes to the database schema, changes to the database configuration, hardware and/or software changes to the computing device on which the database is running, and/or other changes related to the slave copy of the database 242. After the database system changes are complete, replication from the master copy of the database 240 to the slave copy of the database 242 is resumed, as depicted at 254. For example, during the time period in which the database system changes are performed (e.g., a number of seconds, minutes, or hours) database writes are still being directed to the master copy of the database 240. In order to prepare for switching the database connections and the replication, the updated database data needs to be replicated so that the master and slave copies are again in sync.

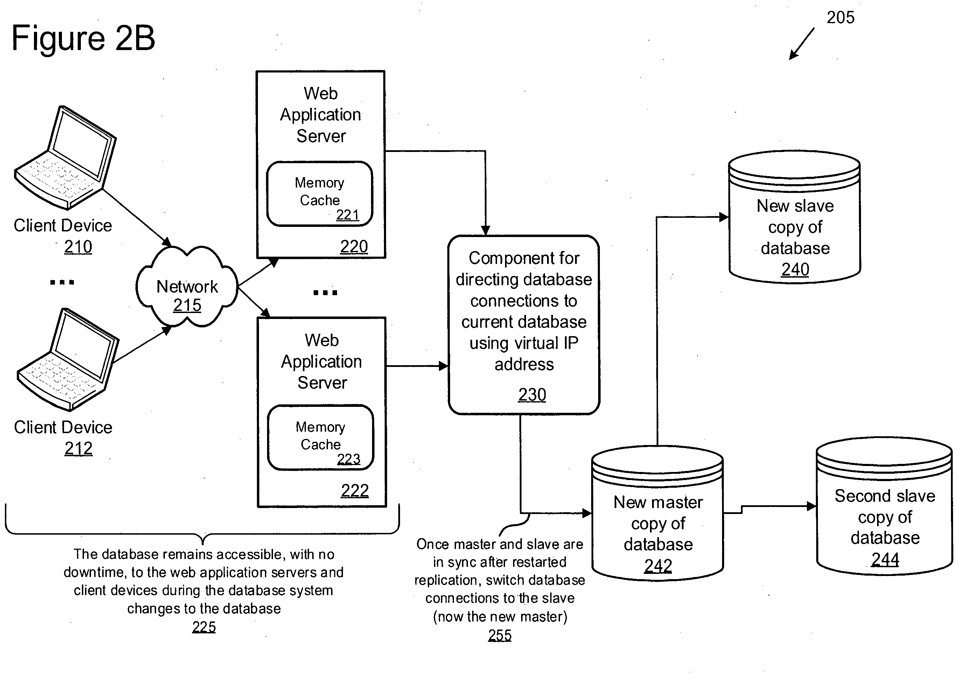

The update process continues in Figure 2B, which is an example environment 205 depicting the database environment of Figure 2A. The update process continues with switching of the database connections, by the component 230, so that database connections are directed to the slave copy of the database 242 (now called the new master copy of the database) instead of the master copy of the database 240 (now called the new slave copy of the database), as depicted at 255. In some implementations, the slave copy of the database 242 is set to a read-write mode before the database connections are switched. In some implementations the switching is only for database connections comprising write operations. Switching of the database connections can be initiated upon the master copy of the database 240 and the slave copy of the database 242 coming into sync after resuming replication.

In some implementations, switching to the new master copy of the database 242 comprises a number of operations. First, the new master copy of the database 242 is set to a read-write mode. Next, the virtual IP address is redirected, via the component 230, to direct database connections to the new master copy of the database 242. Next, replication from the new slave copy of the database 240 to the new master copy of the database 242, which continued until this point, is stopped. Next, the new slave copy of the database 240 is set to a read-only mode. Next, replication is started from the new master copy of the database 242 to the new slave copy of the database 240. Finally, the new code version previously deployed to the web application servers is activated and used by the web application servers and client devices.

As depicted at 225, the entire updated process can be performed while the database remains accessible to the web application servers and client devices. For example, the web application servers and client devices can continue to perform database operations, via database connections managed by the component 230, including operations that read and/or write database data.

The environment supports updating of code versions of software run on the web application servers (e.g., web application servers 220 and 222) and/or client devices (e.g., client devices 210 and 212), collectively called server applications. For example, the web application servers and/or client devices can be running a first code version during the update process. The first code version can utilize memory caches (e.g., memory caches 221 and 223) that store database data with keys associated with the first code version. The first code version (also called a current code version) is configured to operate with the database before the database configuration changes have been applied as well as after the database configuration changes have been applied. For example, the first code version can operate with the database even after database schema changes have been made (e.g., rows inserted using the first code version can use default field values for any new columns added in the schema change). As part of the update process a second code version (also called a new code version) can be introduced. In some implementations, the new code version is deployed (but remains inactive) to the web application servers and/or client devices at or near the beginning of the update process. However, the new code version can be deployed at other times as well. The new code version can utilize the memory caches (e.g., memory caches 221 and 223) that store database data with keys associated with the new code version. The new code version can be activated once the database connections are directed to the new master copy of the database 242.

### Example 3 - Methods Supporting Zero Downtime Database Updates

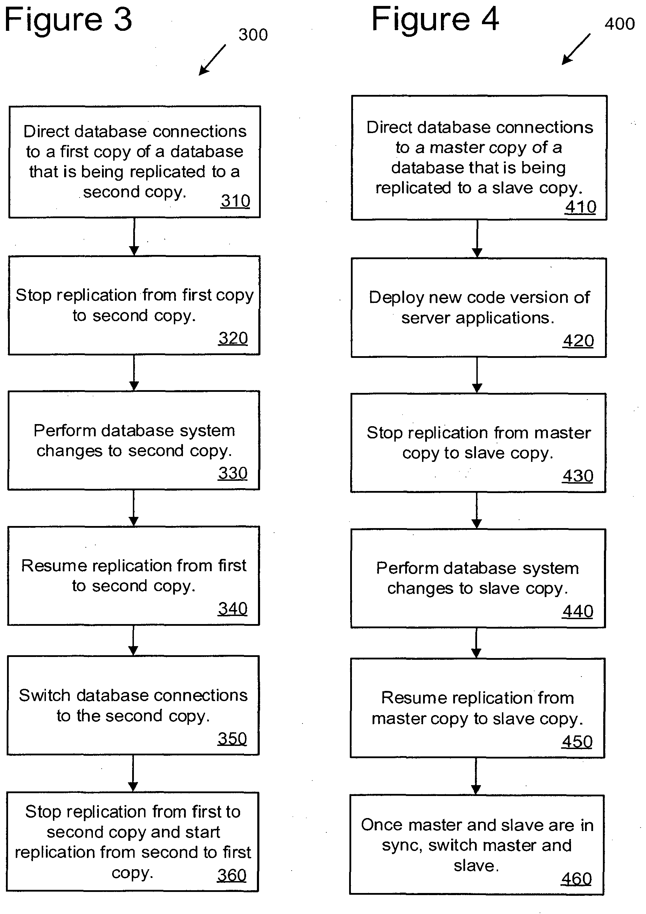

Figure 3 is a flowchart of an example method 300 for performing zero downtime database updates in a database environment using a first and second copy of a database. The database remains accessible throughout the update process. At 310, database connections are directed from server applications to a first copy of a database. The first copy of the database is being replicated to a second copy of the database (e.g., in a master-slave replication arrangement).

At 320, replication from the first copy of the database to the second copy of the database is stopped.

At 330, database system changes are performed to the second copy of the database. The database system changes can comprise database schema changes to the second copy of the database. The database system changes can also comprise changes to the database configuration, hardware and/or software changes to the device (e.g., computer server) on which the second copy of the database is running, and/or other changes associated with the second copy of the database.

At 340, replication is resumed from the first copy of the database to the second copy of the database.

At 350, database connections are switched so that they are directed to the second copy of the database instead of the first copy of the database. In some implementations, database connections that perform write operations are switched, while database connections that do not perform write operations may be directed to the first or second copy of the database.

At 360, replication from the first copy of the database to the second copy of the database is stopped and replication is started from the second copy of the database to the first copy of the database.

Figure 4 is a flowchart of an example method 400 for performing zero downtime database updates in a database environment using a master and slave copy of a database. The database remains accessible throughout the update process. At 410, database connections are directed from server applications to the master copy of the database. The master copy of the database (e.g., currently in a read-write mode) is being replicated to the slave copy of the database (e.g., currently in a read-only mode). The database connections originate from server applications that are running a current code version.

At 420, a new code version of the server applications is deployed. The new code version remains in an inactive state until it is activated.

At 430, replication from the master copy of the database to the slave copy of the database is stopped.

At 440, database system changes are performed to the slave copy of the database. The database system changes can comprise database schema changes to the slave copy of the database. The database system changes can also comprise changes to the database configuration, hardware and/or software changes to the device (e.g., computer server) on which the slave copy of the database is running, and/or other changes associated with the slave copy of the database.

At 450, replication is resumed from the first copy of the database to the second copy of the database.

At 460, once the master and slave copies are in sync after the resumed replication, the copies of the database are switched so that the slave copy becomes the new master copy of the database and the master copy becomes the new slave copy of the database. Switching the copies of the database includes directing database connections (e.g., with write operations) to the new master copy of the database.

In some implementations, switching the copies of the database at 460 involves a number of operations. First, the new master copy of the database is set to a read-write mode. Next, a virtual IP address is switched to point to the new master copy of the database. Next, replication is stopped from the new slave copy of the database to the new master copy of the database. Next, the new slave copy of the database is set to a read-only mode. Next, replication is started from the new master copy of the database to the new slave copy of the database. Finally, the new code version of the server applications is activated.

### Example 4 - Example Implementation of Zero Downtime Database Updates

In an example implementation, zero downtime database updates are performed according to specific conditions and using a specific sequence of operations. The conditions and operations described in this section can be used separately or in combination with other techniques described herein.

In the example implementation, a number of preconditions are established. According to a first precondition, memory cache keys have a code version (also called a build version) as part of the key (e.g., the code version may be appended to the beginning or end of the key). The code version is part of the key so that the keys-value pairs will be kept separate when code versions are dated. According to a second precondition, incoming web application requests have their build versions checked, and the web application server will force the client (e.g., a web browser client) to reload the client code if the build version of the client code is different from the build version of the server code. In this way, the requirement that the server and client are both running the same build version is enforced.

In addition to the preconditions, the database environment is setup as follows. There is one master database (a master copy of the database) and at least one slave database (at least one slave copy of the database). For example, there can be a master database, a first slave database (called slave_1) and a second slave database (called slave_2). There is a virtual IP address that can be switched between the master and slave databases. Having a virtual IP address provides advantages. For example, having a virtual IP address can reduce or eliminate the time window where some existing application server requests will write to the master database while new processes start writing to the slave database. Also, services do not need to be started.

In the example implementation, a number of operations are performed as a first step, as follows. The build version is updated to a new version, called version x+1, to the nodes in the environment (e.g., to the web application servers). Replication is disconnected between the master and slave. Changes to the slave database are performed, including schema changes associated with the new version x+1. The web application continues running and writing new changes to the master database at this time. There are some restrictions on the database schema changes, specifically new columns and fields must be added to the end of the table, and all new columns must have default values. The current build version of the application code must be able to run with the database schema changes (e.g., the new default values). Population of any new columns with non-default values must be done after the update process is complete. If columns need to be deleted from the database, it can be done in a subsequent build (build x+2) when the code that depends on it has been removed.

In a second step, replication is re-enabled from the master to the slave database. All changed rows in the master database since the replication was suspended are propagated to the slave database.

A third step begins once the slave database catches up with the master database (once they are in sync). At this time, any cron processes (processes that run on a periodic scheduled basis) and worker processes (processes that perform background processing tasks) are stopped. Any final changes to the database performed by the cron and worker processes are replicated to the slave database. Next, the slave database is re-labeled as the new master and the master database is re-labeled as the new slave. Note that replication is still running from the new slave to the new master. Next read-only is turned off on the new master. The virtual IP address is switched to point to the new master which is now in read-write mode. Replication is stopped from the new slave to the new master. The new slave is set to read-only mode. The worker and cron processes are started. Finally, replication is started from the new master to the new slave. If additional slaves are present, replication is started from the new master to the additional slaves.

In a final step, the new build version is activated on the web application servers. Any clients that connect to the web application servers that do not have the new build version will automatically download and use the new version.

### Example 5 - Computing Systems

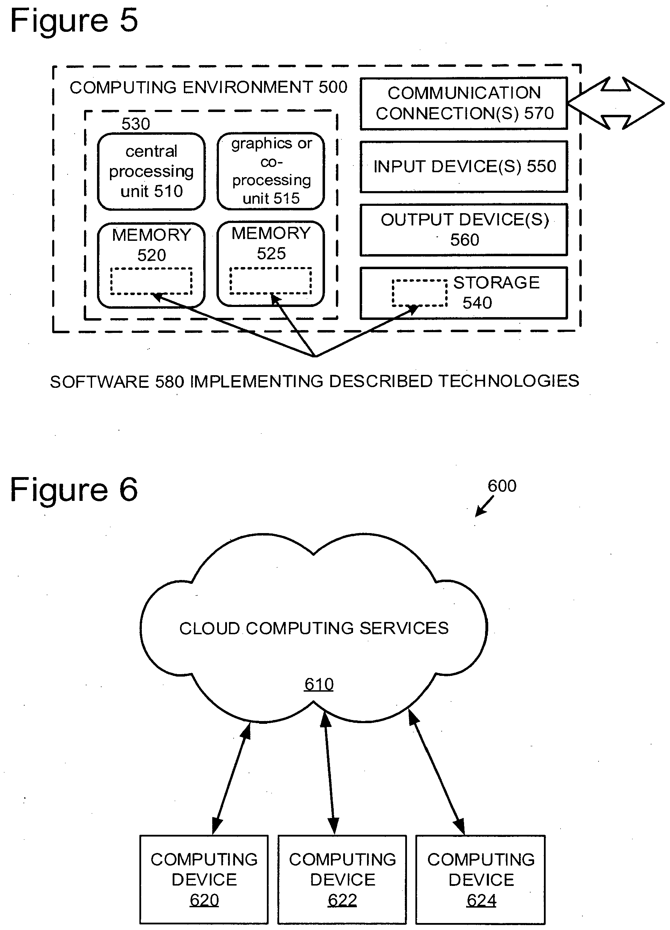

FIG. 5 depicts a generalized example of a suitable computing system 500 in which the described innovations may be implemented. The computing system 500 is not intended to suggest any limitation as to scope of use or functionality, as the innovations may be implemented in diverse general-purpose or special-purpose computing systems.

With reference to FIG. 5, the computing system 500 includes one or more processing units 510, 515 and memory 520, 525. In FIG. 5, this basic configuration 530 is included within a dashed line. The processing units 510, 515 execute computer-executable instructions. A processing unit can be a general-purpose central processing unit (CPU), processor in an application-specific integrated circuit (ASIC) or any other type of processor. In a multi-processing system, multiple processing units execute computer-executable instructions to increase processing power. For example, FIG. 5 shows a central processing unit 510 as well as a graphics processing unit or co-processing unit 515. The tangible memory 520, 525 may be volatile memory (e.g., registers, cache, RAM), non-volatile memory (e.g., ROM, EEPROM, flash memory, etc.), or some combination of the two, accessible by the processing unit(s). The memory 520, 525 stores software 580 implementing one or more innovations described herein, in the form of computer-executable instructions suitable for execution by the processing unit(s).

A computing system may have additional features. For example, the computing system 500 includes storage 540, one or more input devices 550, one or more output devices 560, and one or more communication connections 570. An interconnection mechanism (not shown) such as a bus, controller, or network interconnects the components of the computing system 500. Typically, operating system software (not shown) provides an operating environment for other software executing in the computing system 500, and coordinates activities of the components of the computing system 500.

The tangible storage 540 may be removable or non-removable, and includes magnetic disks, magnetic tapes or cassettes, CD-ROMs, DVDs, or any other medium which can be used to store information in a non-transitory way and which can be accessed within the computing system 500. The storage 540 stores instructions for the software 580 implementing one or more innovations described herein.

The input device(s) 550 may be a touch input device such as a keyboard, mouse, pen, or trackball, a voice input device, a scanning device, or another device that provides input to the computing system 500. For video encoding, the input device(s) 550 may be a camera, video card, TV tuner card, or similar device that accepts video input in analog or digital form, or a CD-ROM or CD-RW that reads video samples into the computing system 500. The output device(s) 560 may be a display, printer, speaker, CD-writer, or another device that provides output from the computing system 500.

The communication connection(s) 570 enable communication over a communication medium to another computing entity. The communication medium conveys information such as computer-executable instructions, audio or video input or output, or other data in a modulated data signal. A modulated data signal is a signal that has one or more of its characteristics set or changed in such a manner as to encode information in the signal. By way of example, and not limitation, communication media can use an electrical, optical, RF, or other carrier.

The innovations can be described in the general context of computer-executable instructions, such as those included in program modules, being executed in a computing system on a target real or virtual processor. Generally, program modules include routines, programs, libraries, objects, classes, components, data structures, etc. that perform particular tasks or implement particular abstract data types. The functionality of the program modules may be combined or split between program modules as desired in various embodiments. Computer-executable instructions for program modules may be executed within a local or distributed computing system.

The terms "system" and "device" are used interchangeably herein. Unless the context clearly indicates otherwise, neither term implies any limitation on a type of computing system or computing device. In general, a computing system or computing device can be local or distributed, and can include any combination of special-purpose hardware and/or general-purpose hardware with software implementing the functionality described herein.

For the sake of presentation, the detailed description uses terms like "determine" and "use" to describe computer operations in a computing system. These terms are high-level abstractions for operations performed by a computer, and should not be confused with acts performed by a human being. The actual computer operations corresponding to these terms vary depending on implementation.

### Example 6 - Cloud Computing Environment

Fig. 6 depicts an example cloud computing environment 600 in which the described technologies can be implemented. The cloud computing environment 600 comprises cloud computing services 610. The cloud computing services 610 can comprise various types of cloud computing resources, such as computer servers, data storage repositories, networking resources, etc. The cloud computing services 610 can be centrally located (e.g., provided by a data center of a business or organization) or distributed (e.g., provided by various computing resources located at different locations, such as different data centers and/or located in different cities or countries).

The cloud computing services 610 are utilized by various types of computing devices (e.g., client computing devices), such as computing devices 620, 622, and 624. For example, the computing devices (e.g., 620, 622, and 624) can be computers (e.g., desktop or laptop computers), mobile devices (e.g., tablet computers or smart phones), or other types of computing devices. For example, the computing devices (e.g., 620, 622, and 624) can utilize the cloud computing services 610 to perform computing operators (e.g., data processing, data storage, and the like).

### Example 7 - Implementations

Although the operations of some of the disclosed methods are described in a particular, sequential order for convenient presentation, it should be understood that this manner of description encompasses rearrangement, unless a particular ordering is required by specific language set forth below. For example, operations described sequentially may in some cases be rearranged or performed concurrently. Moreover, for the sake of simplicity, the attached figures may not show the various ways in which the disclosed methods can be used in conjunction with other methods.

Any of the disclosed methods can be implemented as computer-executable instructions or a computer program product stored on one or more computer-readable storage media and executed on a computing device (e.g., any available computing device, including smart phones or other mobile devices that include computing hardware). Computer-readable storage media are any available tangible media that can be accessed within a computing environment (e.g., one or more optical media discs such as DVD or CD, volatile memory components (such as DRAM or SRAM), or nonvolatile memory components (such as flash memory or hard drives)). By way of example and with reference to Fig. 5, computer-readable storage media include memory 520 and 525, and storage 540. The term computer-readable storage media does not include signals and carrier waves. In addition, the term computer-readable storage media does not include communication connections (e.g., 570).

Any of the computer-executable instructions for implementing the disclosed techniques as well as any data created and used during implementation of the disclosed embodiments can be stored on one or more computer-readable storage media. The computer-executable instructions can be part of, for example, a dedicated software application or a software application that is accessed or downloaded via a web browser or other software application (such as a remote computing application). Such software can be executed, for example, on a single local computer (e.g., any suitable commercially available computer) or in a network environment (e.g., via the Internet, a wide-area network, a local-area network, a client-server network (such as a cloud computing network), or other such network) using one or more network computers.

For clarity, only certain selected aspects of the software-based implementations are described. Other details that are well known in the art are omitted. For example, it should be understood that the disclosed technology is not limited to any specific computer language or program. For instance, the disclosed technology can be implemented by software written in C++, Java, Perl, JavaScript, Adobe Flash, or any other suitable programming language. Likewise, the disclosed technology is not limited to any particular computer or type of hardware. Certain details of suitable computers and hardware are well known and need not be set forth in detail in this disclosure.

Furthermore, any of the software-based embodiments (comprising, for example, computer-executable instructions for causing a computer to perform any of the disclosed methods) can be uploaded, downloaded, or remotely accessed through a suitable communication means. Such suitable communication means include, for example, the Internet, the World Wide Web, an intranet, software applications, cable (including fiber optic cable), magnetic communications, electromagnetic communications (including RF, microwave, and infrared communications), electronic communications, or other such communication means.

The technologies from any example can be combined with the technologies described in any one or more of the other examples. In view of the many possible embodiments to which the principles of the disclosed technology may be applied, it should be recognized that the illustrated embodiments are examples of the disclosed technology and should not be taken as a limitation on the scope of the disclosed technology.

## Claims

1. A method (300; 400) for performing zero downtime database updates in a database environment, the method comprising:
directing (151; 251; 310) database connections, for write operations, from server applications to a first copy of a database (140; 240), wherein the first copy of the database (140; 240) is being replicated (152; 252) to a second copy of the database (142; 242), wherein the second copy of the database (142; 242) is in a read-only mode, and wherein the server applications are running a first code version;
maintaining a first set of entries in a memory cache (221, 223) for database records returned in the database connections when the server applications are running the first code version, the first set of entries including an indication of the first code version;
deploying a new code version of the server applications (420), wherein the new code version is inactive;
stopping replication (153; 253; 320; 430).from the first copy of the database.(140; 240) to the second copy of the database (142; 242);
performing database system changes (153; 253; 330; 440) to the second copy of the database (142; 242), the database system changes comprising database schema changes for the second copy of the database (142; 242);
after performing the database system changes (153; 253; 330; 440), resuming replication (254; 340; 450) from the first copy of the database (140; 240) to the second copy of the database (142; 242);
once the first and second copies are in sync, switching the database connections (154; 255; 350; 460), for write operations, from the server applications to the second copy of the database (142; 242);
stopping replication (155; 360) from the first copy of the database (140; 240) to the second copy of the database (142; 242), and starting replication from the second copy of the database (142; 242) to the first copy of the database (140; 240); and
after starting replication from the second copy of the database (142; 242) to the first copy of the database (140; 240), activating the new code version of the server applications that are used by client and server devices to access the database;
maintaining a second set of entries in the memory cache (221, 223) for database records returned in the database connections when the server applications are running the new code version, the second set of entries including an indication of the new code version;
wherein the database remains accessible (125; 225) throughout the zero downtime database update.

2. The method of claim 1, wherein the first set of entries in the memory cache (221, 223) comprise a first set of keys that include the indication of the first code version, and wherein the second set of entries in the memory cache (221, 223) comprise a second set of keys that include an indication of the new code version.

3. The method of any one of the preceding claims, wherein the changes to the second copy of the database further comprise database configuration changes.

4. The method of any one of the preceding claims, wherein switching (154; 255; 350; 460) the database connections comprises:
directing database connections received at a virtual Internet protocol (IP) address to the second copy of the database (142; 242) instead of the first copy of the database (140; 240), and/or
wherein switching (154; 255; 350; 460) the database connections comprises:
instructing a load balancer to direct all database connection requests that comprise a write operation to the second copy of the database (142; 242) instead of the first copy of the database (140; 240).

5. The method of any one of the preceding claims, wherein the database schema changes comprise:
adding one or more columns to an end of a table in the second copy of the database (142; 242);
using default field values for the one or more added columns.

6. The method of any one of the preceding claims, wherein the first copy of the database (140; 240) and the second copy of the database (142; 242) are in a master-slave replication arrangement.

7. A server environment comprising:
a first computer server running a master copy of a database (140; 240);
a second computer server running a slave copy of the database (142; 242);
the server environment configured to perform operations for zero downtime database updates, the operations comprising:
directing (151; 251; 310) database connections comprising write operations from server applications to the master copy of the database, wherein the master copy of the database is being replicated to the slave copy of the database, wherein the slave copy of the database is in a read-only mode, and wherein the server applications are running a first code version;
maintaining a first set of entries in a memory cache (221, 223) for database records returned in the database connections when the server applications are running the first-code-version, the first set of entries including an indication of the first code version;
deploying (420) a new code version of the server applications, wherein the new code version is inactive;
stopping (153; 253; 320; 430) replication from the master copy of the database to the slave copy of the database;
performing (153; 253; 330; 440) database system changes to the slave copy of the database, the database system changes comprising database schema changes for the slave copy of the database;
after performing (153; 253; 330; 440) the database system changes, resuming replication (254; 340; 450) from the master copy of the database to the slave copy of the database;
once the master and slave copies are in sync, switching (154; 255; 350; 460) the copies of the database so that the slave copy of the database becomes a new master and the master copy of the database becomes a new slave, the switching (154; 255; 350; 460) comprising stopping replication (155; 360) from the master copy of the database (140; 240) to the slave copy of the database (142; 242), starting replication from the new master copy of the database (142; 242) to the new slave copy of the database (140; 240) and directing database connections with write operations to the new master;
wherein the database remains accessible (125; 225) throughout the zero downtime database update;
wherein the server environment is further configured to perform further steps:
after starting replication from the new master copy of the database (142; 242) to the new slave copy of the database (140; 240), activating the new code version of the server applications that are used by client and server devices to access the database; and
maintaining a second set of entries in the memory cache (221, 223) for database records returned in the database connections when the server applications are running the new code version, the second set of entries including an indication of the new code version.

8. The server environment of claim 7, wherein switching (154; 255; 350; 460) the copies of the database comprises:
setting the new master copy of the database to a read-write mode;
switching a virtual Internet protocol (IP) address to point to the new master copy of the database to direct database connections comprising write operations from the server applications to the new master copy of the database;
stopping replication from the new slave copy of the database to the new master copy of the database.

9. The server environment of any one of claims 7 and 8, wherein the changes to the slave copy of the database further comprise database configuration changes.

10. The server environment of any one of claims 7 to 9, wherein directing database connections with write operations to the new master comprises:
switching a virtual Internet protocol (IP) address used for directing database connections so that the virtual IP address directs the database connections to the new master copy of the database.

11. The server environment of any one of claims 7 to 10, wherein the database schema changes comprise:
adding one or more columns to an end of a table in the slave copy of the database;
using default field values for the one or more added columns,
wherein, optionally, before the new code version is activated and after the database schema changes are made, the first code version is configured to operate with the database schema changes.

## Patentansprüche

1. Ein Verfahren (300; 400) zum Durchführen von Datenbank-Updates bzw. -Aktualisierungen ohne Ausfallzeiten in einer Datenbankumgebung, wobei das Verfahren Folgendes umfasst:
Leiten (151; 251; 310) von Datenbankverbindungen für Schreibvorgänge von Serveranwendungen zu einer ersten Kopie einer Datenbank (140; 240), wobei die erste Kopie der Datenbank (140; 240) zu einer zweiten Kopie der Datenbank (142; 242) repliziert wird (152; 252), wobei sich die zweite Kopie der Datenbank (142; 242) in einem Nur-Lese-Modus bzw. in einem schreibgeschützten Modus befindet, und wobei die Serveranwendungen eine erste Codeversion ausführen;
Halten eines ersten Satzes von Einträgen in einem Cache-Speicher (221, 223) für Datenbank-Datensätze, die in den Datenbankverbindungen zurückgegeben werden, wenn die Serveranwendungen die erste Codeversion ausführen, wobei der erste Satz von Einträgen eine Angabe zur ersten Codeversion beinhaltet;
Bereitstellen einer neuen Codeversion der Serveranwendungen (420), wobei die neue Codeversion inaktiv ist;
Stoppen der Replikation (153; 253; 320; 430) von der ersten Kopie der Datenbank (140; 240) zur zweiten Kopie der Datenbank (142; 242);
Durchführen von Datenbanksystem-Änderungen (153; 253; 330; 440) an der zweiten Kopie der Datenbank (142; 242), wobei die Datenbanksystem-Änderungen Datenbankschema-Änderungen für die zweite Kopie der Datenbank (142; 242) umfassen;
nach dem Durchführen der Datenbanksystem-Änderungen (153; 253; 330; 440), Wiederaufnehmen der Replikation (254; 340; 450) von der ersten Kopie der Datenbank (140; 240) zur zweiten Kopie der Datenbank (142; 242);
wenn die erste und zweite Kopie synchronisiert sind, Umschalten der Datenbankverbindungen (154; 255; 350; 460) für Schreibvorgänge von den Serveranwendungen auf die zweite Kopie der Datenbank (142; 242);
Stoppen der Replikation (155; 360) von der ersten Kopie der Datenbank (140; 240) zur zweiten Kopie der Datenbank (142; 242), und Starten der Replikation von der zweiten Kopie der Datenbank (142; 242) zur ersten Kopie der Datenbank (140; 240); und
nach dem Starten der Replikation von der zweiten Kopie der Datenbank (142; 242) zur ersten Kopie der Datenbank (140; 240), Aktivieren der neuen Codeversion der Serveranwendungen, die von Client- und Server-Geräten für den Zugriff auf die Datenbank verwendet werden;
Halten eines zweiten Satzes von Einträgen im Cache-Speicher (221, 223) für Datenbank-Datensätze, die in den Datenbankverbindungen zurückgegeben werden, wenn die Serveranwendungen die neue Codeversion ausführen, wobei der zweite Satz von Einträgen eine Angabe zur neuen Codeversion beinhaltet;
wobei die Datenbank während der Aktualisierung der Datenbank ohne Ausfallzeiten zugänglich bleibt (125; 225).

2. Das Verfahren nach Anspruch 1, wobei der erste Satz von Einträgen im Cache-Speicher (221, 223) einen ersten Satz von Schlüsseln umfasst, die die Angabe zur ersten Codeversion beinhalten, und wobei der zweite Satz von Einträgen im Cache-Speicher (221, 223) einen zweiten Satz von Schlüsseln umfasst, die eine Angabe zur neuen Codeversion beinhalten.

3. Das Verfahren nach irgendeinem der vorstehenden Ansprüche, wobei die Änderungen an der zweiten Kopie der Datenbank ferner Änderungen der Datenbank-Konfiguration umfassen.

4. Das Verfahren nach irgendeinem der vorstehenden Ansprüche, wobei das Umschalten (154; 255; 350; 460) der Datenbankverbindungen Folgendes umfasst:
Leiten von Datenbankverbindungen, die an einer virtuellen Internetprotokoll-(IP) Adresse empfangen werden, an die zweite Kopie der Datenbank (142; 242) anstelle der ersten Kopie der Datenbank (140; 240), und/oder
wobei das Umschalten (154; 255; 350; 460) der Datenbankverbindungen Folgendes umfasst:
Anweisen eines *Load Balancers*, alle Datenbankverbindungs-Anforderungen, die einen Schreibvorgang umfassen, an die zweite Kopie der Datenbank (142; 242) anstelle der ersten Kopie der Datenbank (140; 240) zu richten.

5. Das Verfahren nach irgendeinem der vorstehenden Ansprüche, wobei die Datenbankschema-Änderungen Folgendes umfassen:
Hinzufügen einer oder mehrerer Spalten an ein Ende einer Tabelle in der zweiten Kopie der Datenbank (142; 242);
Verwenden von Standard-Feldwerten für die eine oder die mehreren hinzugefügten Spalten.

6. Das Verfahren nach irgendeinem der vorstehenden Ansprüche, wobei die erste Kopie der Datenbank (140; 240) und die zweite Kopie der Datenbank (142; 242) in einer Master-Slave-Replikationsanordnung vorliegen.

7. Eine Serverumgebung, die Folgendes umfasst:
einen ersten Computerserver, der eine Master-Kopie einer Datenbank (140; 240) ausführt;
einen zweiten Computerserver, der eine Slave-Kopie der Datenbank (142; 242) ausführt;
wobei die Serverumgebung konfiguriert ist, um Update- bzw. Aktualisierungs-Operationen ohne Ausfallzeiten an der Datenbank durchzuführen, wobei die Operationen Folgendes umfassen:
Leiten (151; 251; 310) von Datenbankverbindungen, die Schreiboperationen von Serveranwendungen auf die Masterkopie der Datenbank umfassen, wobei die Masterkopie der Datenbank auf die Slave-Kopie der Datenbank repliziert wird, wobei sich die Slave-Kopie der Datenbank in einem Nur-Lese-Modus bzw. in einem schreibgeschützten Modus befindet, und wobei die Serveranwendungen eine erste Codeversion ausführen;
Halten eines ersten Satzes von Einträgen in einem Cache-Speicher (221, 223) für Datenbank-Datensätze, die in den Datenbankverbindungen zurückgegeben werden, wenn die Serveranwendungen die erste Codeversion ausführen, wobei der erste Satz von Einträgen eine Angabe zur ersten Codeversion beinhaltet;
Bereitstellen (420) einer neuen Codeversion der Serveranwendungen, wobei die neue Codeversion inaktiv ist;
Stoppen (153; 253; 320; 430) der Replikation von der Master-Kopie der Datenbank auf die Slave-Kopie der Datenbank;
Durchführen (153; 253; 330; 440) von Änderungen des Datenbanksystems an der Slave-Kopie der Datenbank, wobei die Datenbanksystem-Änderungen Datenbankschema-Änderungen für die Slave-Kopie der Datenbank umfassen;
nach dem Durchführen (153; 253; 330; 440) der Datenbanksystem-Änderungen, Wiederaufnahme der Replikation (254; 340; 450) von der Masterkopie der Datenbank zur Slave-Kopie der Datenbank;
sobald die Master- und Slave-Kopien synchronisiert sind, Austauschen (154; 255; 350; 460) der Kopien der Datenbank, sodass die Slave-Kopie der Datenbank zu einem neuen Master und die Master-Kopie der Datenbank zu einem neuen Slave wird, wobei das Austauschen (154; 255; 350; 460) Folgendes umfasst: das Stoppen der Replikation (155; 360) von der Masterkopie der Datenbank (140; 240) zur Slave-Kopie der Datenbank (142; 242), das Starten der Replikation von der neuen Masterkopie der Datenbank (142; 242) zur neuen Slave-Kopie der Datenbank (140; 240) und das Leiten von Datenbankverbindungen mit Schreiboperationen zu dem neuen Master;
wobei die Datenbank während der Aktualisierung der Datenbank ohne Ausfallzeiten zugänglich bleibt (125; 225);
wobei die Serverumgebung ferner konfiguriert ist, um ferner Folgende Schritte auszuführen:
nach dem Starten der Replikation von der neuen Masterkopie der Datenbank (142; 242) auf die neue Slave-Kopie der Datenbank (140; 240), Aktivieren der neuen Codeversion der Serveranwendungen, die von Client- und Server-Geräten für den Zugriff auf die Datenbank verwendet werden; und
Halten eines zweiten Satzes von Einträgen im Cache-Speicher (221, 223) für Datenbank-Datensätze, die in den Datenbankverbindungen zurückgegeben werden, wenn die Serveranwendungen die neue Codeversion ausführen, wobei der zweite Satz von Einträgen eine Angabe zur neuen Codeversion beinhaltet.

8. Die Serverumgebung nach Anspruch 7, wobei das Austauschen (154; 255; 350; 460) der Kopien der Datenbank Folgendes umfasst:
Setzen der neuen Masterkopie der Datenbank in einen Lese-/Schreibmodus;
Umschalten einer virtuellen Internetprotokoll (IP) - Adresse, um auf die neue Masterkopie der Datenbank zu verweisen und somit Datenbankverbindungen zu leiten, die Schreiboperationen der Serveranwendungen auf die neue Masterkopie der Datenbank umfassen;
Stoppen der Replikation von der neuen Slave-Kopie der Datenbank auf die neue Master-Kopie der Datenbank.

9. Die Serverumgebung nach irgendeinem der Ansprüche 7 und 8, wobei die Änderungen an der Slave-Kopie der Datenbank ferner Änderungen der Datenbank-Konfiguration umfassen.

10. Die Serverumgebung nach irgendeinem der Ansprüche von 7 bis 9, wobei das Leiten von Datenbankverbindungen mit Schreib-Operationen auf den neuen Master Folgendes umfasst:
Umschalten einer virtuellen Internetprotokoll (IP) - Adresse, die zum Leiten von Datenbankverbindungen verwendet wird, sodass die virtuelle IP-Adresse die Datenbankverbindungen auf die neue Masterkopie der Datenbank leitet.

11. Die Serverumgebung nach irgendeinem der Ansprüche von 7 bis 10, wobei die Änderungen des Datenbank-Schemas Folgendes umfassen:
Hinzufügen einer oder mehrerer Spalten an ein Ende einer Tabelle in der Slave-Kopie der Datenbank;
Verwenden von Standard-Feldwerten für die eine oder die mehreren hinzugefügten Spalten,
wobei, optional, bevor die neue Codeversion aktiviert wird und nachdem die Datenbankschema-Änderungen vorgenommen wurden, die erste Codeversion konfiguriert ist, um mit den Datenbankschema-Änderungen zu arbeiten.

## Revendications

1. Un procédé (300 ; 400) pour effectuer des mises à jour de base de données sans temps d'arrêt dans un environnement de base de données, le procédé comprenant le fait de :
guider (151 ; 251 ; 310) des connexions de base de données, pour des opérations d'écriture, depuis des applications serveur vers une première copie d'une base de données (140 ; 240), sachant que la première copie de la base de données (140 ; 240) est répliquée (152 ; 252) vers une seconde copie de la base de données (142 ; 242), sachant que la seconde copie de la base de données (142 ; 242) est en mode lecture seule, et sachant que les applications serveur exécutent une première version code ;
maintenir un premier jeu d'entrées dans une mémoire cache (221, 223) pour les enregistrements de base de données retournés dans les connexions de base de données lorsque les applications serveur exécutent la première version de code, le premier jeu d'entrées incluant une indication sur la première version de code ;
déployer une nouvelle version de code des applications serveur (420), sachant que la nouvelle version de code est inactive ;
arrêter la réplication (153 ; 253 ; 320 ; 430) depuis la première copie de la base de données (140 ; 240) vers la deuxième copie de la base de données (142 ; 242) ;
apporter des modifications de système de base de données (153 ; 253 ; 330 ; 440) à la deuxième copie de la base de données (142 ; 242), les modifications apportées au système de base de données comprenant des modifications du schéma de base de données pour la deuxième copie de la base de données (142 ; 242) ;
après avoir effectué les modifications du système de base de données (153 ; 253 ; 330 ; 440), relancer la réplication (254 ; 340 ; 450) depuis la première copie de la base de données (140 ; 240) vers la deuxième copie de la base (142 ; 242) ;
une fois que les première et deuxième copies sont synchronisées, commuter les connexions de base de données (154 ; 255 ; 350 ; 460), pour des opérations d'écriture, depuis des applications serveur vers la deuxième copie de la base de données (142 ; 242) ;
arrêter la réplication (155 ; 360) depuis la première copie de la base de données (140 ; 240) vers la deuxième copie de la base de données (142 ; 242), et commencer la réplication depuis la deuxième copie de la base de données (142 ; 242) vers la première copie de la base de données (140 ; 240) ; et
après avoir relancé la réplication depuis la deuxième copie de la base de données (142 ; 242) vers la première copie de la base de données (140 ; 240), activer la nouvelle version de code des applications serveur qui sont utilisées par les dispositifs client et serveur pour accéder à la base de données ;
maintenir un deuxième jeu d'entrées dans la mémoire cache (221, 223) pour les enregistrements de base de données retournés dans les connexions de base de données lorsque les applications serveur exécutent la nouvelle version du code, le deuxième jeu d'entrées incluant une indication sur la nouvelle version du code ;
sachant que la base de données reste accessible (125 ; 225) tout au long de la mise à jour de la base de données sans temps d'arrêt.

2. Le procédé d'après la revendication 1, sachant que le premier ensemble d'entrées dans la mémoire cache (221, 223) comprend un premier ensemble de clés incluant l'indication de la première version de code, et sachant que le deuxième ensemble d'entrées dans la mémoire cache (221, 223) comprend un deuxième ensemble de clés incluant une indication de la nouvelle version de code.

3. Le procédé d'après l'une quelconque des revendications précédentes, sachant que les modifications apportées à la deuxième copie de la base de données comprennent en outre des modifications de la configuration de base de données.

4. Le procédé d'après l'une quelconque des revendications précédentes, sachant que la commutation (154 ; 255 ; 350 ; 460) des connexions de base de données comprend le fait de :
guider les connexions de base de données reçues à une adresse de protocole Internet virtuel (IP) vers la deuxième copie de la base de données (142 ; 242) au lieu de la première copie de la base de données (140 ; 240), et/ou
sachant que la commutation (154 ; 255 ; 350 ; 460) des connexions de base de données comprend le fait de :
demander à un équilibreur de charge de guider toutes les demandes de connexion de base de données qui comprennent une opération d'écriture vers la deuxième copie de la base de données (142 ; 242) au lieu de la première copie de la base de données (140 ; 240).

5. Le procédé d'après l'une quelconque des revendications précédentes, sachant que les modifications apportées au schéma de base de données comprennent le fait de :
ajouter une ou plusieurs colonnes à la fin d'une table dans la deuxième copie de la base de données (142 ; 242) ;
utiliser les valeurs de champ implicites (*default*) pour une ou plusieurs colonnes ajoutées.

6. Le procédé d'après l'une quelconque des revendications précédentes, sachant que la première copie de la base de données (140 ; 240) et la deuxième copie de la base de données (142 ; 242) se trouvent dans un dispositif de réplication maître-esclave.

7. Un environnement de serveur comprenant :
un premier serveur informatique exécutant une copie maître d'une base de données (140 ; 240) ;
un deuxième serveur informatique exécutant une copie esclave de la base de données (142 ; 242) ;
l'environnement serveur étant configuré pour effectuer des opérations de mise à jour de base de données sans temps d'arrêt, les opérations comprenant le fait de :
guider (151 ; 251 ; 310) des connexions de base de données comprenant des opérations d'écriture depuis des applications serveur vers la copie maître de la base de données, sachant que la copie maître de la base de données est répliquée vers la copie esclave de la base de données, sachant que la copie esclave de la base de données est en mode lecture seule, et sachant que les applications serveur exécutent une première version de code ;
maintenir un premier jeu d'entrées dans une mémoire cache (221, 223) pour les enregistrements de base de données retournés dans les connexions de base de données lorsque les applications serveur exécutent la première version de code, le premier jeu d'entrées incluant une indication sur la première version de code ;
déployer (420) une nouvelle version de code des applications serveur, sachant que la nouvelle version de code est inactive ;
arrêter la réplication (153 ; 253 ; 320 ; 430) depuis la copie maître de la base de données vers la copie esclave de la base de données ;
apporter (153 ; 253 ; 330 ; 440) des modifications de système de base de données à la copie esclave de la base de données, les modifications de système de base de données comprenant des modifications de schéma de base de données pour la copie esclave de la base de données ;
après avoir apporté (153 ; 253 ; 330 ; 440) les modifications au système de base de données, relancer la réplication (254 ; 340 ; 450) depuis la copie maître de la base de données vers la copie esclave de la base de données ;
une fois que les copies maître et esclave sont synchronisées, commuter (154 ; 255 ; 350 ; 460) les copies de la base de données de manière que la copie esclave de la base de données devienne un nouveau maître et la copie maître de la base de données devienne un nouvel esclave, la commutation (154 ; 255 ; 350 ; 460) comprenant le fait d'arrêter la réplication (155 ; 360) depuis la copie maître de la base de données (140 ; 240) depuis la nouvelle copie maître de la base de données (142 ; 242) vers la nouvelle copie esclave de la base de données (140 ; 240) et de guider les connexions de base de données avec des opérations d'écriture vers le nouveau maître ;
sachant que la base de données reste accessible (125 ; 225) tout au long de la mise à jour de la base de données sans temps d'arrêt ;
sachant que l'environnement serveur est en outre configuré pour effectuer en outre les étapes suivantes :
après avoir relancé la réplication depuis la nouvelle copie maître de la base de données (142 ; 242) vers la nouvelle copie esclave de la base de données (140 ; 240), activer la nouvelle version de code des applications serveur qui sont utilisées par les dispositifs client et serveur pour accéder à la base de données ; et
maintenir un deuxième jeu d'entrées dans la mémoire cache (221, 223) pour les enregistrements de base de données retournés dans les connexions de base de données lorsque les applications serveur exécutent la nouvelle version du code, le deuxième jeu d'entrées incluant une indication sur la nouvelle version du code.

8. L'environnement de serveur d'après la revendication 7, sachant que la commutation (154 ; 255 ; 350 ; 460) des copies de la base de données comprend le fait de :
mettre la nouvelle copie maître de la base de données en mode lecture/écriture ;
commuter une adresse de protocole Internet (IP) virtuelle pour pointer vers la nouvelle copie maître de la base de données afin de guider les connexions de base de données comprenant des opérations d'écriture depuis les applications serveur vers la nouvelle copie maître de la base de données ;
arrêter la réplication depuis la nouvelle copie esclave de la base de données vers la nouvelle copie maître de la base de données.

9. L'environnement de serveur d'après l'une quelconque des revendications 7 et 8, sachant que les modifications apportées à la copie esclave de la base de données comprennent en outre des modifications de configuration de la base de données.

10. L'environnement de serveur d'après l'une quelconque des revendications de 7 à 9, sachant que le fait de guider des connexions de base de données avec des opérations d'écriture vers le nouveau maître comprend :
commuter une adresse de protocole Internet (IP) virtuelle utilisée pour guider les connexions de base de données de manière que l'adresse IP virtuelle guide les connexions de base de données vers la nouvelle copie maître de la base de données.

11. L'environnement de serveur d'après l'une quelconque des revendications de 7 à 10, sachant que les modifications du schéma de base de données comprennent :
ajouter une ou plusieurs colonnes à la fin d'une table dans la copie esclave de la base de données ;
utiliser les valeurs de champ implicites (*default*) pour une ou plusieurs colonnes ajoutées,
sachant que, facultativement, avant que la nouvelle version de code soit activée et après que les modifications du schéma de base de données aient été effectuées, la première version de code est configurée pour fonctionner avec les modifications du schéma de base de données.
